# EUROPÄISCHE PATENTANMELDUNG

(11) **EP 2 345 492 A2**
(43) Veröffentlichungstag der Anmeldung: **20.07.2011**
(21) Anmeldenummer: 10194844.6
(22) Anmeldetag: 14.12.2010
(51) Int. Cl.: B23B 25/00, B21H 1/18, B21H 3/00, B21H 7/18

(54) **Materialabtragende Werkzeugmaschine mit einer Kaltrolleinheit**

(30) Priorität: 19.01.2010 DE 102010005006
(71) Anmelder: MAG IAS GmbH, 73033 Göppingen (DE)
(72) Erfinder: Stanik, Markus, Dr., 73095 Allershausen (DE); Stumpp, Hans-Joachim, 73084 Salach (DE)
(74) Vertreter: Alber, Norbert

(57) **Zusammenfassung**

Um die Investition in eine separate Kaltwalzmaschine für das Aufbringen von Gewinden etc. zu sparen, wird eine Kaltrolleinheit (2) verfahrbar auf die Z-Führungen der Drehmaschine gesetzt, die dadurch wesentlich größer, stabiler und verschleißärmer als die in einem Werkzeugrevolver eingesetzten Kontrolleinheit arbeitet. Selbst Parallelbearbeitung durch Drehen und Walzen ist dadurch möglich.

## Beschreibung

### l. Anwendungsgebiet

Die Erfindung betrifft eine materialabtragende Werkzeugmaschine mit zusätzlichem Kaltwalz-Modul, bei der das Werkstück während der Bearbeitung drehend angetrieben wird, z. B. eine Dreh- oder Drehfräsbearbeitung.

### ll. Technischer Hintergrund

Aus Gründen der Übersichtlichkeit wird - im Folgenden jedoch nur - von "Drehmaschinen" gesprochen.

Unter einer Drehmaschine werden für die Zwecke der vorliegenden Anmeldung aber auch alle Drehmaschinen-Derivate verstanden, also beispielsweise Drehfräsmaschinen und Drehräummaschinen, also jede Maschine, bei der zum Zwecke der Bearbeitung das Werkstück von einer Spindel drehend angetrieben wird und Werkzeugeinheiten - Drehwerkzeuge, Fräswerkzeuge, Räumwerkzeuge oder Schleifwerkzeuge - in Richtung der Rotationsachse des Werkstückes als auch quer hierzu verfahrbar sind und am Werkstück arbeiten können.

Auf Drehmaschinen werden meist ganz oder zumindest teilweise rotationssymmetrische Werkstücke dadurch gefertigt, dass das Werkstück z. B. in einem Spannfutter gehalten und dieses von einem Spindelstock drehend angetrieben wird, und das rotierende Werkstück durch angreifende Werkzeuge, beispielsweise stillstehende Werkzeuge (Drehen) oder rotierende Werkzeuge (Scheibenfräser, Fingerfräser, scheibenförmige Räumwerkzeuge) oder tangential geradlinig bewegte Werkzeuge (Räumnadeln) eine Materialabnahme am Werkstück bewirkt wird.

Die Werkzeugeinheiten sind dabei in der Z-Richtung, der Rotationsrichtung des Werkstückes, verfahrbar und darüber hinaus in mindestens einer der Querrichtungen (X- und Y-Richtung).

Bei Drehmaschinen werden die Drehwerkzeuge heute in aller Regel auf einer schwenkbaren Revolverscheibe in größerer Anzahl untergebracht, und ein solcher Werkzeugrevolver ist mindestens in X-Richtung verfahrbar und in Richtung Z-Richtung.

In der Regel sind zwei solcher Revolver auf bezüglich der Drehachse gegenüberliegenden Seiten vorhanden.

Die Drehachse, also die Rotationsachse des Werkstückes, kann je nach Maschinenkonzept horizontal liegend oder aufrechtstehend angeordnet sein.

Daneben ist auch das Kaltwalzen bekannt, um mittels eines Kaltumformprozesses durch Anpressen von entsprechend konturierten Rollen oder Stangen gegen den Umfang eines rotierenden Werkstückes auf dem Werkstückumfang Verzahnungen, Gewinde, Ringnuten, Rändelungen, Ölnuten oder andere Konturierungen aufzupressen.

Da hierfür ganz erhebliche Anpresskräfte gegen das Werkstück erforderlich sind, wird ein solches Kaltwalzen - wenn größere Stückzahlen damit bearbeitet werden sollen - in aller Regel in einer separaten Kaltwalzmaschine durchgeführt.

Daneben ist es auch bekannt, eine Kaltwalzeinheit in Form einer Kaltrolleinheit direkt in einer Drehmaschine einzusetzen, indem diese - dann sehr viel kleinere Kaltrolleneinheit - mit ihren in der Regel zwei Walzrollen in eine der Werkzeugaufnahmen des Werkzeugrevolvers einer Drehmaschine eingesteckt werden kann.

Zum einen sind die dadurch auf das Werkstück aufbringbaren Presskräfte natürlich sehr viel geringer, abhängig von der maximalen Belastbarkeit der Werkzeugaufnahme und des Werkzeugrevolvers samt dessen Führungen.

Dies beschränkt die Größe, insbesondere Tiefe, der Einprägungen auf dem Werkstück, die damit herzustellen sind, abhängig vom Werkstückmaterial.

Zum anderen bedingt dies auch einen relativ schnellen Verschleiß der aufgrund des Anbringungsortes kleinen Walzrollen, sodass damit Einzelstücke oder Kleinserien bearbeitet werden können, aber keine Großserien.

Ein weiterer Nachteil dieser Lösung besteht darin, dass wegen der vielen zwischen den Walzrollen und dem Bett vorhandenen lösbaren Verbindungsstellen, also Führungen und Ähnlichem, die Maßgenauigkeit der damit herstellbaren Profilierungen am Werkstück nicht optimal ist.

Zwischen diesen beiden Extremen - also separate Kaltwalzmaschine einerseits und nur sehr begrenzt nutzbare Kaltrolleinheit in der Werkzeugaufnahme eines Drehmaschinenrevolvers andererseits - klafft jedoch eine weite Lücke für die Lösung des Problems, die in der Praxis einen Großteil der Bearbeitungsfälle ausmacht.

### lll. Darstellung der Erfindung

### a) Technische Aufgabe

Es ist daher die Aufgabe gemäß der Erfindung, eine Maschine und ein Verfahren zur Verfügung zu stellen, welches die Nachteile des Standes der Technik beseitigt und insbesondere so viele wie mögliche der gestellten Kaltwalzaufgaben an einem rotationssymmetrischen Werkstück lösen kann ohne die Investition in eine separate Kaltwalzmaschine und ohne die technischen Einschränkungen eines Kaltroll-Moduls im Werkzeugrevolver einer Drehmaschine.

### b) Lösung der Aufgabe

Diese Aufgabe wird durch die Merkmale der Ansprüche 1 und 9 gelöst. Vorteilhafte Ausführungsformen ergeben sich aus den Unteransprüchen.

Eine erfindungsgemäße Werkzeugmaschine weist eine Kaltrolleinheit auf, die abseits der spanenden Werkzeuge und deren Werkzeugaufnahmen angeordnet sind, also nicht Bestandteil dieser Werkzeugeinheiten sind, und bei Bedarf an das in dem Spindelfutter der Werkzeugmaschine gehaltene Werkstück herangefahren werden kann, insbesondere auf den gleichen Führungen, die hierfür auch für die spanenden Werkzeugeinheiten verwendet werden, beispielsweise die Z-Führungen.

Auf diese Art und Weise kann die Kaltrolleinheit als Zusatzmodul und damit auch nachrüstbar an jeder geeigneten, gattungsgemäßen Werkzeugmaschine eingesetzt und auch nachgerüstet werden, wobei der bauliche Aufwand gering bleibt, da wesentliche Komponenten der Werkzeugmaschine wie Spindel, Futter und Z-Führungen von der Kaltrolleinheit mitbenutzt werden.

Da die Kaltrolleinheit jedoch nicht Bestandteil der spanenden Werkzeugeinheiten ist, sondern unabhängig davon verfahren und in Betrieb gesetzt werden kann, ist die Kaltrolleinheit nicht an die Geometrien der Werkzeugaufnahme der spanenden Werkzeugeinheiten gebunden. Der Kraftfluss geht nicht über z.B. die Schwenkachse des Werkzeugrevolvers und die Werkzeugaufnahmen, sondern von der Kaltrolleinheit direkt in die benutzten Führungen, z. B. Z-Führungen, in das Maschinenbett.

Dadurch wird eine hohe Stabilität der Kaltrolleinheit erzielt, die somit wesentlich höhere Kräfte aufbringen kann als eine im Werkzeugrevolver aufgenommene Kaltrolleinheit.

Ebenso sind dadurch größere, verschleißärmere, Walzrollen einsetzbar, so dass eine erfindungsgemäße Kaltrolleinheit auch starke Oberflächenumformungen am Werkstück bewirken kann und dies mit einer hohen Stückzahl bis zur Verschleißgrenze der Walzrollen, wodurch ein großer Prozentsatz der anfallenden Kaltwalzaufgaben an rotationssymmetrischen Werkstücken bewältigt werden kann, ohne in eine separate Kaltwalzmaschine investieren zu müssen, die um ein Vielfaches teuerer ist als die Zusatzkosten für eine erfindungsgemäß ausgestattete Werkzeugmaschine.

Damit die Material abnehmende Bearbeitung des Werkstückes nicht behindert wird, befindet sich die Kaltrolleinheit in aller Regel auf der von der Spindel abgewandten Seite der spanenden, also Material abnehmenden, Werkzeugeinheiten, und kann somit völlig aus dem Längenbereich des im Futter gehaltenen Werkstückes weggefahren werden.

Zu diesem Zweck weist die Wälzrolleinheit auch eine schließbare Abdeckung, insbesondere in Richtung Spindel, also den spanabhebenden Werkzeugeinheiten, auf, um zu verhindern, dass während der spanenden Bearbeitung Späne in die Kaltrolleinheit eindringen, da sich die Z-Führungen, auf denen sie verfährt, in der Regel über den gesamten Arbeitsbereich und insbesondere axial auch darüber hinaus erstrecken.

Der Aufbau der Kaltrolleinheit umfasst in der Regel einen Grundkörper, der entlang des Bettes verfahrbar ist, beispielsweise auf den Z-Führungen der Maschine, wobei sich der Grundkörper primär in Querrichtung zur Drehachse der Werkzeugmaschine erstreckt, so dass entlang des Grundkörpers zwei oder auch mehr um die Drehmitte herum angeordnete Walzrolleneinheiten verfahrbar sind, die insbesondere von Hydraulikzylindern bewegt werden, um die hohen Kräfte beim Kaltwalzen aufzubringen.

Der Grundkörper umfasst vorzugsweise ein C-förmiges Basisteil, wobei der mittlere Schenkel der C-Form auf den Führungen läuft, und die davon weg weisenden Enden der freien Schenkel durch einen demontierbaren Zugstab am Auseinanderdrücken durch die Kaltwalzkräfte gehindert werden, wodurch ein umlaufend geschlossener Tragkörper entsteht, in dem die Walzrolleneinheiten aufgenommen sind.

Die Walzrolleneinheiten umfassen neben der Walzrolle jeweils einen separaten, der Walzrolle zugeordneten Antriebsmotor, sowie eine - meist elektrische - Synchronisierung der beiden Antriebsmotore.

Ferner umfasst die Walzrolleneinheit eine Reitstockspitze, die in Richtung der Drehachse entlang des Grundkörpers der Kaltrolleinheit verfahren werden kann, um das frei auskragende Ende des Werkstückes beim Kaltwalzvorgang in Querrichtung abzustützen. Vorzugsweise kann die Reitstockspitze soweit axial verfahren werden, dass sie auch bei der Material abnehmenden Bearbeitung das Werkstück stirnseitig abstützen kann.

Alternativ kann die Werkzeugmaschine auch einen eigenen Reitstock oder eine Gegenspindel aufweisen, so dass sich die Kaltrolleinheit dann zwischen der Hauptspindel einerseits und dem Reitstock oder der Gegenspindel andererseits bei der Kaltwalz-Bearbeitung befindet.

Dann ist es jedoch notwendig, dass die Reitstockspitze für die Wälzbearbeitung zwischen die Walzrollen-Einheiten hinein verfahrbar sein muss, und für den Einsatz der Gegenspindel oder des Reitstockes während der spanenden Bearbeitung die beiden Walzrolleneinheiten soweit in Querrichtung auseinander gefahren werden können, dass sie in Z-Richtung über das vordere freie Ende des Reitstockes bzw. des Gegenspindelfutters hinweg verfahren werden können.

Des Weiteren umfasst eine erfindungsgemäße Werkzeugmaschine vorzugsweise eine Steuerung, die nicht nur die Kaltrolleinheit steuert, sondern die gesamte Werkzeugmaschine einschließlich der Kaltrolleinheit.

Hierzu gehört, dass sie beim Kaltwalzen die Signale hinsichtlich Drehzahl und auch Winkellage der Walzrollenantriebe (und damit des Werkstückes) von der Kaltrolleinheit erhält, und weiterverarbeitet, und - falls gleichzeitig eine spanabnehmende Bearbeitung am Werkstück an anderer Stelle erfolgt - diese Informationen dann auch für die Steuerung der materialabnehmenden Bearbeitung nutzt.

Falls die Maschine über eine automatische Messeinheit verfügt, kann die Steuerung die Messwerte des Werkstückes vor dem Kaltrollen, z. B. den aktuellen Durchmesser, dazu benutzen, um die Walzrolleneinheiten automatisch in Abhängigkeit hiervon exakt einzustellen, wodurch die Qualität, insbesondere die Maßhaltigkeit, der umgeformten Oberfläche verbessert wird. Ansonsten muss dies ab und zu von Hand nachkorrigiert werden.

Mit einer solchen Maschine ist es somit möglich, sowohl das Aufwalzen einer Oberflächenstruktur auf einer Außenumfangsfläche des zumindest teilweise rotationssymmetrischen Werkstückes als auch eine Materialabnahme auf der gleichen Werkzeugmaschine durchzuführen.

Die beiden Bearbeitungsvorgänge können zeitlich nacheinander durchgeführt werden.

In diesem Fall ist bei materialabnehmender Bearbeitung das Werkstück von der Werkstückspindel der Werkzeugmaschine angetrieben und im Fall der Kaltwalzbearbeitung von den Walzrollen angetrieben.

Beide Bearbeitungen können jedoch auch gleichzeitig am Werkstück - an unterschiedlichen Z-Positionen - durchgeführt werden, wobei dann das Werkstück von den Walzrollenantrieben aus angetrieben wird, und die Steuerung der Werkzeugmaschine die Drehzahlinformation bezüglich des Werkstückes ebenfalls von den Walzrollenantrieben erhält.

Der Drehantrieb der Werkzeugspindel, in deren Spannfutter das Werkstück sowohl bei spanabhebender Bearbeitung als auch beim Kaltwalzen gehalten wird, wird beim Kaltwalzen - egal, ob zusätzlich eine Materialabnahme am Werkstück stattfindet oder nicht - entweder auf Freilauf geschaltet, oder auf eine Antriebsdrehzahl, die mit dem primär von den Walzrollen kommenden Antrieb des Werkstückes synchronisiert ist.

Der Ablauf des Kaltwalzvorganges erfolgt so, dass zunächst die Werkzeugspindel auf Freilauf oder auf Synchronbetrieb mit den Walzrollenantrieben umgeschaltet wird, und die Reitstockspitze - sei es der Kaltrolleinheit oder eines separaten Reitstockes der Werkzeugmaschine - oder auch eine an der Werkzeugmaschine vorhandene Gegenspindel und deren Spannfutter an dem frei auskragenden Ende des Werkstückes in Ansatz gebracht wird.

In aller Regel werden erst danach die Walzrollenantriebe in Gang gesetzt und in Querrichtung gegen das Werkstück bewegt, bis sie an diesem in Eingriff geraten und mit der Anpresskraft gegen das Werkstück unter ständigem Abrollen die gewünschte Oberflächenstruktur in die Umfangsfläche des Werkstückes eingepresst wird.

### c) Ausführungsbeispiele

Ausführungsformen gemäß der Erfindung sind im Folgenden beispielhaft näher beschrieben. Es zeigen:
- Fig. 1:: Die erfindungsgemäße Werkzeugmaschine,
- Fig. 2:: die Kaltrolleinheit,
- Fig. 3:: die Kaltrolleinheit mit Montagesituation, und
- Fig. 4:: die Kaltrolleinheit mit Schutzabdeckung.

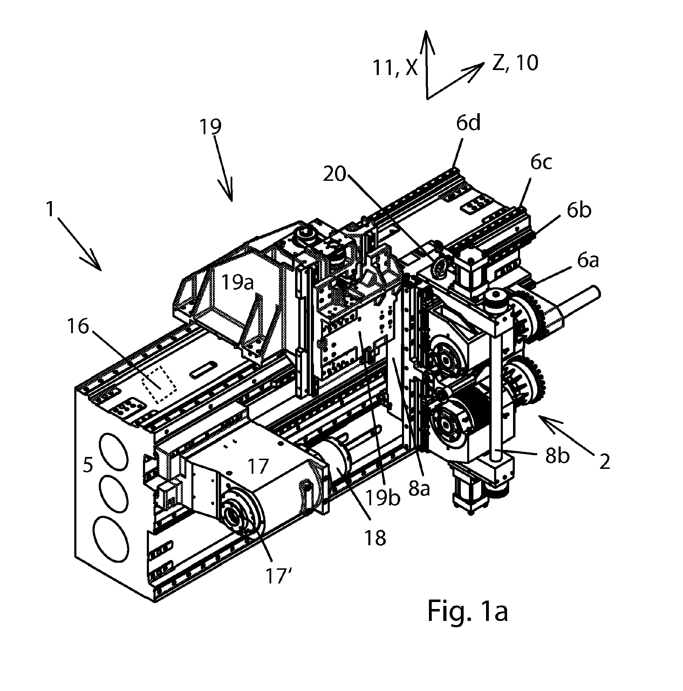

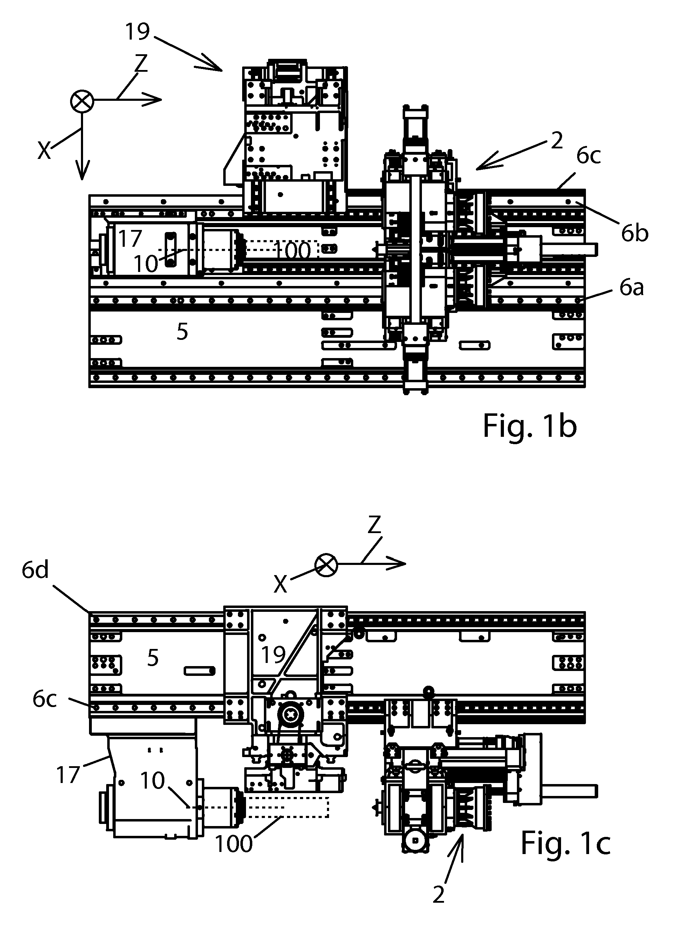

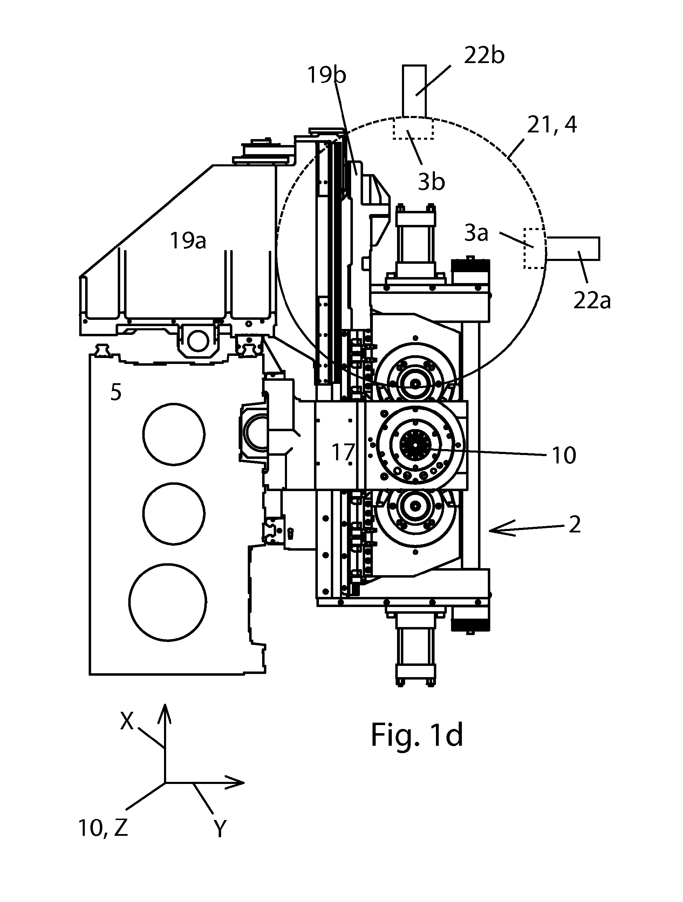

Die Figuren 1 zeigen die erfindungsgemäße Werkzeugmaschine 1 in der Figur 1a in perspektivischer Ansicht, in der Figur 1b in der Frontansicht von vorne, in Figur 1c in der Aufsicht von oben und in Figur 1d betrachtet in Richtung der Drehachse 10.

Bei der Werkzeugmaschine 1 sind dabei aus Übersichtlichkeitsgründen alle Verkleidungen weggelassen.

Das Maschinenbett 5 ist im Querschnitt etwa rechteckig und aufrecht stehend gestaltet, mit Z-Führungen 6a, b auf der Frontseite als auch mit Z-Führungen 6c, d auf der Oberseite.

Der Spindelstock 17 ist an der Frontfläche des Bettes 5 in deren in den Figuren linken Bereich - fix oder in Z-Richtung verschiebbar - gehalten und steht dort nach vorne vor.

Im Spindelstock 17 ist eine Werkzeugspindel 17' drehbar gelagert, die an ihrem zum Arbeitsbereich hin weisenden freien Ende ein Spannfutter 18 zum spannenden Aufnehmen und Halten eines nur in den Figuren 1b und 1c angedeuteten Werkstückes 100 trägt.

Auf den Z-Führungen 6c und 6d der Oberseite des Bettes 5 als auch der vordersten Führung 6b der Frontseite des Bettes 5 läuft der Werkzeugsupport 19, bestehend aus einem auf den genannten Führungen laufenden Z-Schlitten 19a sowie einem X-Schlitten 19b, der an der Frontfläche des Z-Schlittens 19a verfahrbar quer zur Drehachse geführt ist und in der Praxis eine Werkzeugeinheit 4, beispielsweise einen Werkzeugrevolver 21, trägt, wie er nur in Figur 1d mit nur zwei Werkzeugen 22a, b angedeutet ist, die sich in seinen Werkzeugaufnahmen 3a, b... befinden.

In der Praxis ist häufig unterhalb der Drehmitte 10 an der Frontfläche des Bettes 5 ein weiterer, hier ebenfalls aus Übersichtlichkeitsgründen nicht dargestellter, Werkzeugsupport mit Z- und X-Schlitten und Werkzeugrevolver vorhanden.

Erfindungsgemäß wesentlich in Figur 1 ist die gemäß der rechten Hälfte des Bettes dargestellte Kaltrolleinheit 2, die ebenfalls die Z-Führungen 6a, b auf der Vorderseite des Bettes 5 und die vordere Z-Führung 6c auf der Oberseite des Bettes 5 nutzt, und auf der vom Werkzeugsupport 19 bezüglich der Spindel 17' gegenüberliegenden Seite angeordnet ist.

Damit kann die Kaltrolleinheit 2 in Z-Richtung an das im Spannfutter 18 gehaltene Werkstück 100 heran und von diesem weg verfahren werden, wobei der Werkzeugsupport 19 vorzugsweise in Z-Richtung nicht nur bis an den Spindelstock 17 heran, sondern auch über diesen hinweg verfahren werden kann, um die Kaltwalzbearbeitung nicht zu behindern.

Dadurch kann das vordere, frei auskragende Ende des Werkstückes 100 in die Kaltrolleinheit 2 hinein verfahren und dort mittels Kaltwalzen umgeformt werden.

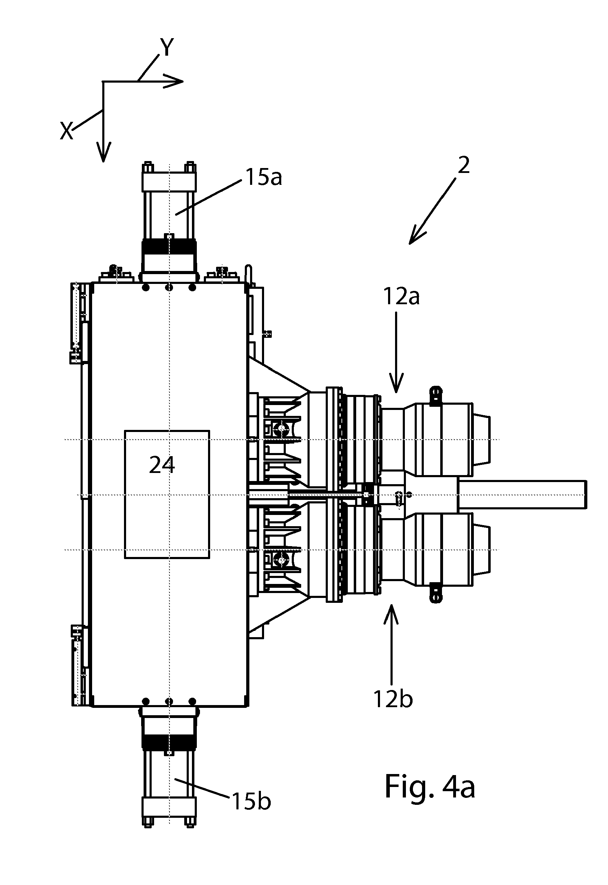

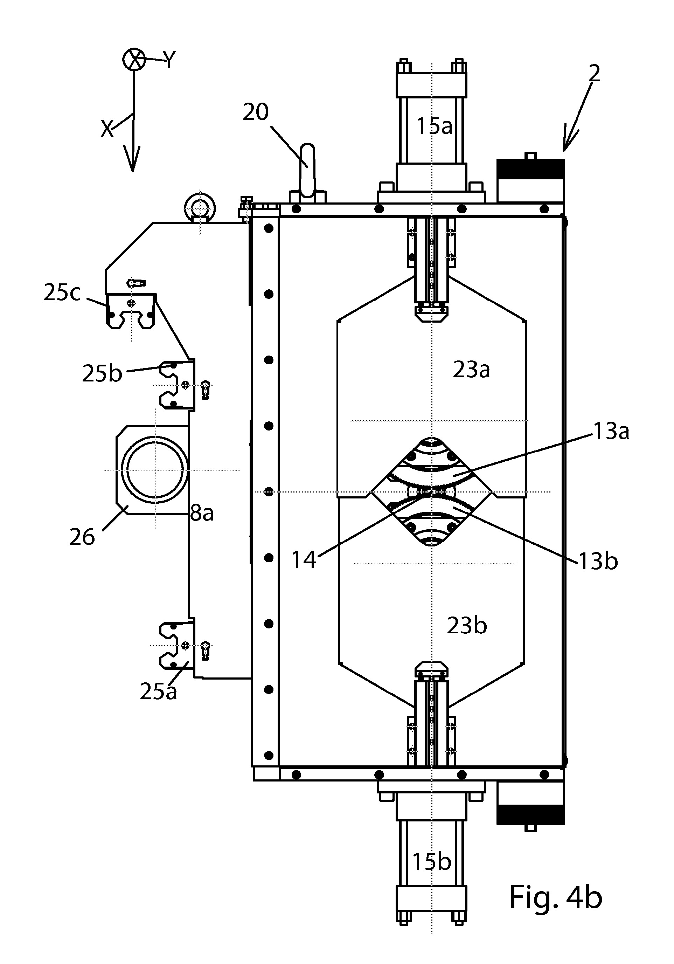

In den Darstellungen der Figur 1 sind weiterhin an der Kaltrolleinheit 2 die in der Praxis dort vorhandenen Abdeckungen weggelassen, wie die Figuren 4 zeigen:
In Figur 4b - die die Kaltrolleinheit 2 in der gleichen Blickrichtung wie Figur 1d zeigt - ist sichtbar, dass die Stirnfläche der Kaltrolleinheit 2 in dieser Blickrichtung durch zwei blendenartig gegeneinander verschiebbare Abdeckungen 23a, b weitestgehend oder auch vollständig verschlossen werden kann, damit ein Hineinspritzen von Spänen, die bei der spanenden Bearbeitung anfallen, in die Kaltrolleinheit 2 und insbesondere zwischen die Walzrollen 13a, b vermieden wird.

Aus dem gleichen Grund ist auch die in der Frontansicht der Maschine gemäß Figur 4a sichtbare Frontfläche der Kaltrolleinheit 2 vollständig verschlossen bis auf eine bewegliche Abdeckung 24 - die auch transparent ausgebildet sein kann - im mittleren Bereich, die geöffnet werden kann, um den Verschleiß an den Walzrollen 13a, b und ähnliches zu überprüfen, oder auch den Kaltwalzprozess direkt während der Durchführung in Augenschein zu nehmen.

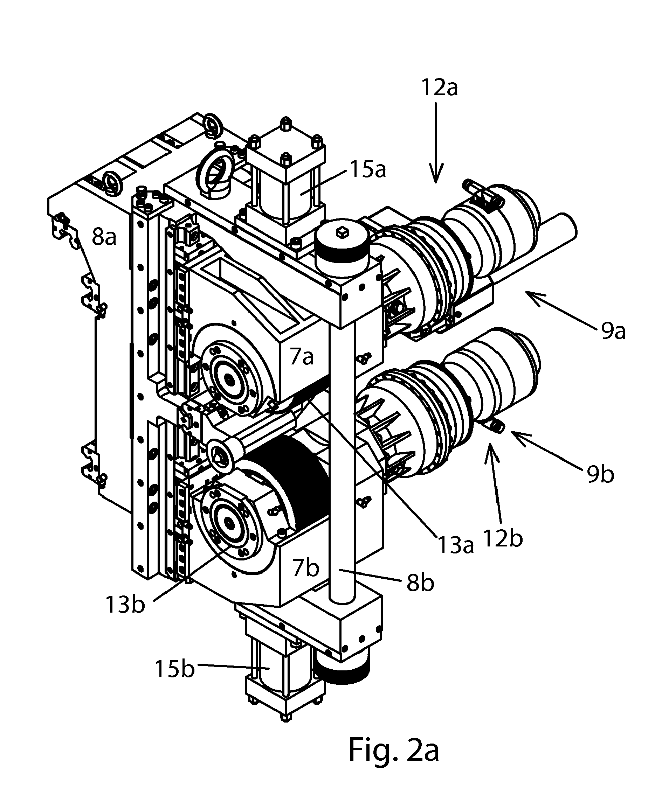

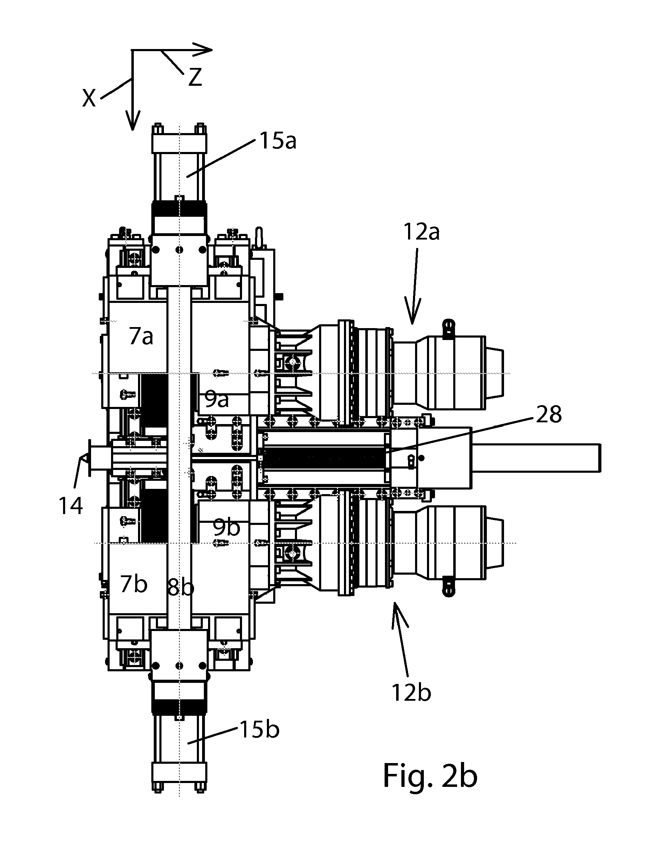

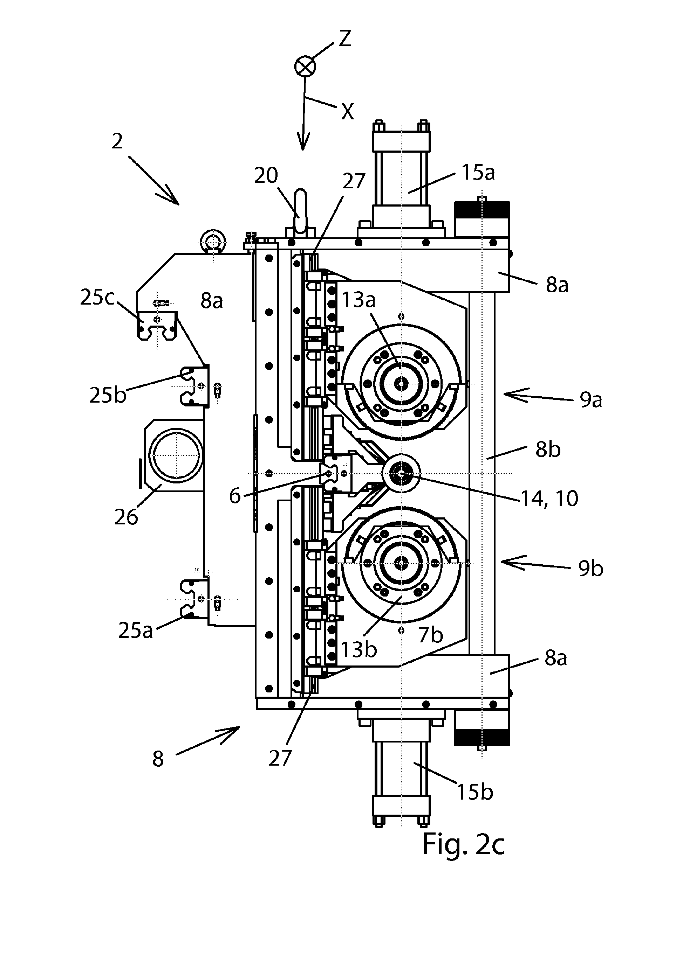

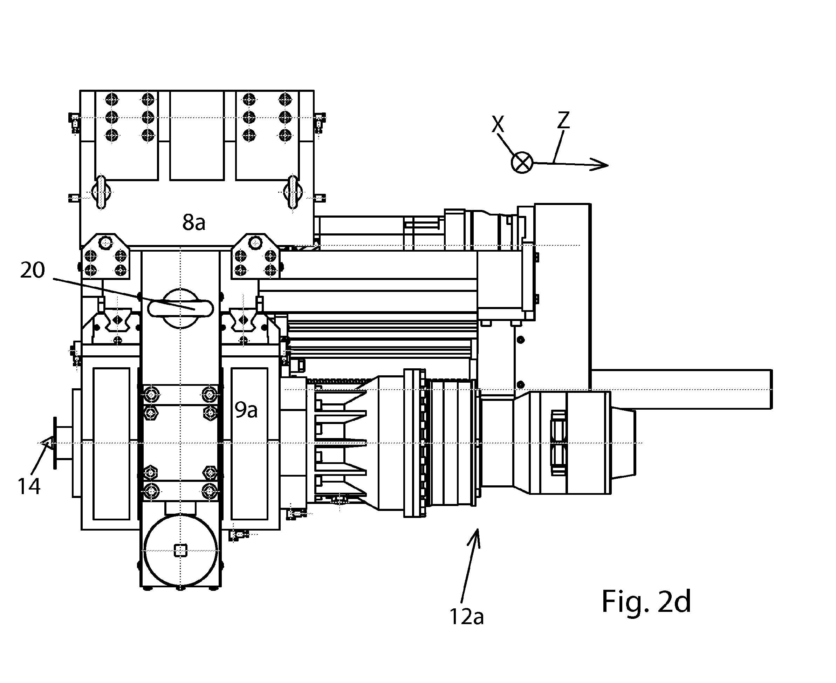

Die Figuren 2 zeigen die unverkleidete Kaltrolleinheit 2 in perspektivischer Ansicht (Figur 2a), in Frontansicht quer zur Drehachse (Figur 2b), in einer Ansicht in Richtung der Drehachse (Figur 2c) und in der Aufsicht von oben (Figur 2d).

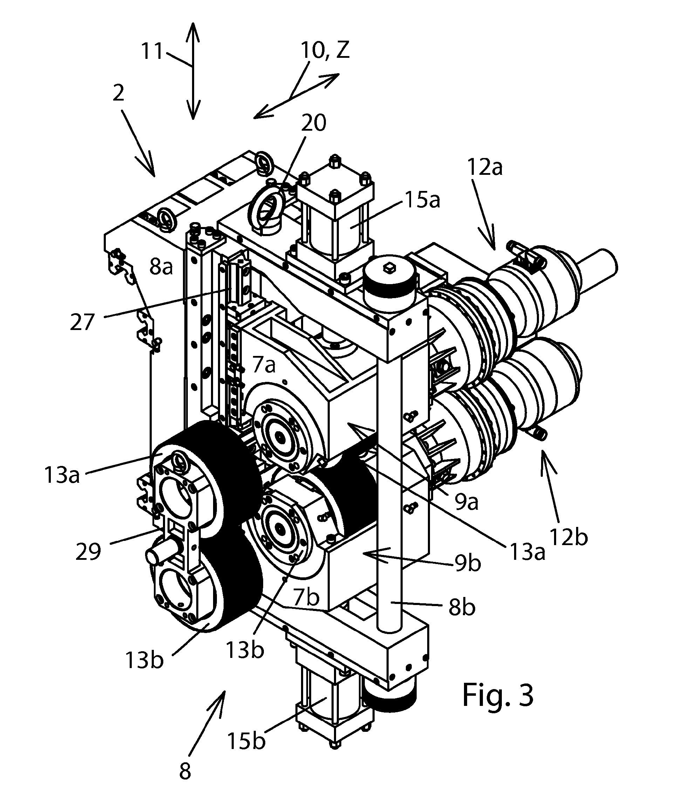

Figur 3 entspricht der perspektivischen Ansicht der Figur 2a, jedoch sind dort die Walzrollen 13a, b zusätzlich ein zweites Mal kurz vor/nach der Montage/Demontage dargestellt**,** wobei sie an einem Montagejoch 15 befestigt sind, das nach der Montage wieder entfernt wird.

Wie am besten die Figuren 2a und 2c erkennen lassen, besteht der Grundkörper 8 der Kaltrolleinheit 2 aus einem in der Ansicht der Figur 2c C-förmigen Basisteil 8a, dessen offene Vorderseite durch eine die frei endenden, nach vorne ragenden, Schenkel verbindende Zugstange 8b zu einem umlaufend geschlossenen Grundkörper 8 komplettiert, in dessen Inneren die beiden Walzrolleneinheiten 9a, b angeordnet sind.

Der Grundkörper 8 ist mit der Rückseite seines Basisteils 8a über dort angeordnete Gleitschuhe 25a bis 25c in Z-Richtung entlang der beiden Führungen 6 a, b der Frontseite sowie der vordersten Führung 6a, c der Oberseite des Bettes 5 verfahrbar mittels einer die Zugspindelaufnahme 26 des Grundkörpers 8 durchlaufende Zugspindel.

In den Figuren 2a und 2c ist auch die Tragöse 20 an der Oberseite dieses Grundkörpers 8 gut zu erkennen, mit deren Hilfe die gesamte Kaltrolleinheit 2 von der Werkzeugmaschine 1 demontiert und wieder an dieser angeordnet werden kann, woraus auch ersichtlich ist, dass bei Bedarf für spezielle Anwendungsfälle beim Drehen oder Fräsen die Kaltrolleinheit entfernt werden oder auch bei einer konventionellen Drehmaschine oder Fräsmaschine nachgerüstet werden kann.

An der Vorderseite des vertikal verlaufenden mittleren Schenkels des Basisteiles 8a ist eine in Querrichtung 11 der Maschine 1 verlaufende X-Führung 27 angeordnet, entlang welcher die beiden Walzrolleneinheiten 9a, b in X-Richtung verfahrbar sind, deren Rotationsachsen sich auf der durch die Drehmitte 10 X-Achse befinden.

Die Walzrolleneinheiten 9a, b besitzen je einen Tragkörper 7a,b, in dem die Gleitschuhe zum Verfahren entlang der X-Führung 27 angeordnet sind und in dem die eigentliche, drehbare Walzrolleneinheit 9a, b gelagert ist, wobei die Walzrollen 13a, beidseitig in dem jeweiligen Tragkörper 7a,b gelagert sind.

Am hinteren Ende, z. B. in Figur 2b rechts, ist jeweils ein Antriebsmotor 12a, b an jeder der Walzrolleneinheiten 9a, b vorhanden, die den Drehantrieb der Walzrollen 13a, b gewährleisten.

Wenn sich das Werkstück zwecks Kaltwalzen zwischen den Walzrollen 13a, b befindet, müssen diese mit hohem Druck beidseits gegen das Werkstück, also jeweils in Richtung Drehmitte 10, gepresst werden, was mit Hilfe jeweils eines sich am Basisteil 8a abstützenden, in X-Richtung verlaufenden Hydraulikzylinders 15a, b realisiert ist, der jeweils einen der Tragkörper 7a,b in X-Richtung beaufschlagt.

Die Kaltrolleinheit 2 umfasst ferner eine eigene Reitstockspitze 14, die beispielsweise in Figur 2b gut zu erkennen ist, jedoch - wie in Figur 2c ersichtlich - in Z-Richtung nicht fest, sondern entlang einer an dem Grundkörper 8, insbesondere dem Basisteil 8a, angeordneten Z-Führung 6z relativ zum Grundkörper 8 verfahrbar ist, was mittels einer Antriebsspindel 28 erfolgt.

Diese wird relativ zum Grundkörper 8 in Z-Richtung so verfahren, dass trotz Anlage dieser Reitstockspitze 24 am frei auskragenden Ende des Werkstückes 100 der gewünschte Längenbereich des Werkstückes 100 sich zwischen den Walzrollen 13a, b befindet und kaltgewalzt werden kann.

Verfügt stattdessen die Werkzeugmaschine 1 über einen eigenen Reitstock oder eine eigene Gegenspindel mit Spannfutter, die beim Kaltwalzen eingesetzt werden sollen, so sind die Walzrolleneinheiten 9a, b so gestaltet, dass die Reitstockspitze oder das Gegenspindelfutter der Werkzeugmaschine zwischen ihnen beiden soweit einfahren bzw. hindurchfahren kann, dass sie während des Kaltwalzens das freie Ende des Werkstückes 100 abstützt.

### BEZUGSZEICHENLISTE

- 1: Werkzeugmaschine
- 2: Kaltrolleinheit
- 3a, b: Werkzeugaufnahme
- 4a, b: Werkzeugeinheiten
- 5: Maschinenbett
- 6a - d, z: Z-Führungen
- 7a,b: Tragkörper
- 8: Grundkörper
- 8a: Basisteil
- 8b: Zugstange
- 9a, b: Walzrolleneinheiten
- 10: Drehmitte
- 11: Querrichtung 12a, b Antriebsmotor
- 13a, b: Walzrolle
- 14: Reitstockspitze
- 15: Montagejoch
- 16: Steuerung
- 17: Spindelstock
- 17': Spindel
- 18: Spannfutter
- 19: Werkzeugsupport
- 20: Tragöse
- 21: Werkzeugrevolver
- 22a, b: Werkzeug
- 23a, b: Abdeckung
- 24: Abdeckung
- 25a, b: Gleitschuh
- 26: Zugspindelaufnahme
- 27: X-Führung
- 28: Antriebsspindel
- 100: Werkstück

## Patentansprüche

1. Materialabtragende Werkzeugmaschine (1) mit rotierend angetriebenem Werkstück (100), insbesondere eine Drehmaschine, mit einer Kaltrolleinheit (2),
**dadurch gekennzeichnet, dass**
die Kaltrolleinheit (2) abseits der Werkzeugeinheiten (4a, b) für die materialabtragenden Werkzeuge (22a..) angeordnet ist und insbesondere auf den Z-Führungen (6a, b..) der materialabtragenden Werkzeugeinheiten (4a, b) am Maschinenbett (5) verfahrbar ist.

2. Materialabtragende Werkzeugmaschine nach Anspruch 1,
**dadurch gekennzeichnet, dass**
die Kaltrolleinheit (2) entlang der Z-Führungen (6a...) der Werkzeugmaschine (1) verfahrbar ist und auf der von der Spindel (17') abgewandten Seite der materialabtragenden Werkzeugeinheiten (4a...) angeordnet ist.

3. Materialabtragende Werkzeugmaschine nach einem der vorhergehenden Ansprüche,
**dadurch gekennzeichnet, dass**
die Kaltrolleinheit (2) einen Grundkörper (8) umfasst, der entlang des Bettes (5) verfahrbar ist und wenigstens zwei Walzrollen-Einheiten (9a, b) entlang des Grundkörpers (8) auf die Drehmitte (10) zu und von dieser weg verfahrbar sind, und insbesondere von Hydraulikzylindern (15a, b) bewegt werden, sowie insbesondere an den axialen Stirnseiten bewegliche, die Kaltrolleinheit (2) insbesondere vollständig verschließbare Abdeckungen (23a,b, 24), und insbesondere der Grundkörper (8) ringförmig umlaufend geschlossen ist und im Inneren die Walzrolleneinheiten (9a, b) trägt und insbesondere aus einem einstückigen, C-förmigen Basisteil (8a) besteht, das entlang des Bettes (5) verfahrbar ist, sowie einem die freien Enden des C-förmigen Basisteiles (8a) verbindenden Zugstab (8b).

4. Materialabtragende Werkzeugmaschine nach einem der vorhergehenden Ansprüche,
**dadurch gekennzeichnet, dass**
die Walzrollen-Einheiten (9a, b) jeweils einen Antriebsmotor (12a, b) für die Walzrollen (13a, b) umfassen und diese Antriebsmotore (12a, b) miteinander synchronisiert sind.

5. Materialabtragende Werkzeugmaschine nach einem der vorhergehenden Ansprüche,
**dadurch gekennzeichnet, dass**
die Werkzeugmaschine (1) weder einen eigenen Reitstock noch Gegenspindel besitzt und die Kaltrolleinheit (2) eine Reitstockspitze (14) mit umfasst, die insbesondere entlang des Grundkörpers (8) der Kaltrolleinheit (2) in Z-Richtung verfahrbar ist, insbesondere soweit verfahrbar ist, dass sie im ausgefahrenen Zustand das Werkstück (100) bei der materialabtragenden Bearbeitung stirnseitig abstützen kann.

6. Materialabtragende Werkzeugmaschine nach einem der vorhergehenden Ansprüche 1 bis 4,
**dadurch gekennzeichnet, dass**
die Werkzeugmaschine (1) einen eigenen Reitstock oder eine Gegenspindel umfasst und die Walzrolleneinheiten (9a, b), insbesondere entlang des Grundkörper (8), soweit in Querrichtung (11) auseinander gefahren werden können, dass sie in Z-Richtung über das vordere freie Ende dieser Reitstockspitze oder des Gegenspindelfutters der Werkzeugmaschine (1) hinweg verfahren werden können.

7. Materialabtragende Werkzeugmaschine nach einem der vorhergehenden Ansprüche,
**dadurch gekennzeichnet, dass**
die Werkzeugmaschine (1) eine Steuerung (16) umfasst, die die Signale hinsichtlich der Drehzahl und insbesondere auch der Winkellage der Walzrollenantriebe erhält und weiterverarbeitet, und insbesondere für die materialabtragende Bearbeitung des Werkstückes (100) benutzt.

8. Materialabtragende Werkzeugmaschine nach einem der vorhergehenden Ansprüche,
**dadurch gekennzeichnet, dass**
die Werkzeugmaschine (1) eine automatische Messvorrichtung aufweist und die Steuerung (16) in der Lage ist, deren Messergebnisse des Werkstückes (100) vor dem Kaltrollen zum automatischen Einstellen der Kaltrolleinheit (2) beim Kaltrollen zu benutzen.

9. Verfahren zum Bearbeiten eines wenigstens teilweise rotationssymmetrischen Werkstückes (100) durch
- Aufwalzen einer Oberflächenstruktur auf einer Außenumfangsfläche einerseits und
- Materialabtragung andererseits, bei jeweils drehendem Werkstück (100),
**dadurch gekennzeichnet, dass**
- beide Bearbeitungsvorgänge auf der gleichen Werkzeugmaschine (1) durchgeführt werden,
- im Fall der ausschließlich materialabtragenden Bearbeitung das Werkstück (100) von der Werkstückspindel (17') angetrieben wird,
- im Fall der Kaltwalzbearbeitung das Werkstück (100) von den Walzrollen (13a, b) angetrieben, aber in der Werkstückspindel (17') gehalten wird.

10. Verfahren nach Anspruch 9,
**dadurch gekennzeichnet, dass**
die materialabtragende Bearbeitung und das Kaltwalzen am Werkstück (100) gleichzeitig durchgeführt werden und die Steuerung (16) der Maschine (1) die Drehzahlinformation bezüglich des Werkstückes (100) von den Walzrollenantrieben erhält.

11. Verfahren nach einem der vorhergehenden Ansprüche,
**dadurch gekennzeichnet, dass**
die Kaltrolleinheit (2) von der Steuerung (16) der Werkzeugmaschine (1) aus angesteuert wird.

12. Verfahren nach einem der vorhergehenden Ansprüche,
**dadurch gekennzeichnet, dass**
zum ausschließlichen Kaltwalzen des Werkstückes (100)
- das einseitig im Spannfutter (18) eingespannte Werkstück (100) darin belassen und die Werkstückspindel (17'), insbesondere auf Freilauf geschaltet wird oder synchron zu den Walzrollen (13a, b) angetrieben wird,
- die Kaltrolleinheit (2) in Z-Richtung an das Werkstück (100) herangefahren wird, bis die Walzrollen (13a, b) die Z-Position für den kaltzuwalzenden Bereich am Werkstück (100) erreicht haben,
- die Reitstockspitze (14), insbesondere entlang des Grundkörpers (8) der Kaltrolleinheit (2), gegen das Werkstück (100) bis zur Anlage an dessen Stirnfläche vorwärtsgefahren wird,
- die Walzrollenantriebe in Gang gesetzt und
- die X-Antriebe der Walzrolleneinheiten (9a, b) in Gang gesetzt werden.

13. Verfahren nach Anspruch 12,
**dadurch gekennzeichnet, dass**
die Steuerung (16) die Messergebnisse einer vorhandenen automatischen Messvorrichtung bezüglich des Werkstückes (100) vor dem Kaltrollen zum automatischen Einstellen der Kaltrolleinheit (2) beim Kaltrollen verwendet.
